# EUROPÄISCHE PATENTSCHRIFT

(11) **EP 1 107 160 B1**
(45) Veröffentlichungstag und Bekanntmachung des Hinweises auf die Patenterteilung: **02.11.2006**
(21) Anmeldenummer: 00122656.2
(22) Anmeldetag: 18.10.2000
(51) Int. Cl.: G06K 7/00

(54) **Kartenlesevorrichtung**
Card reading device
Dispositif de lecture de cartes

(30) Priorität: 10.12.1999 DE 19959462
(43) Veröffentlichungstag der Anmeldung: 13.06.2001
(73) Patentinhaber: National Rejectors, Inc. GmbH, 21614 Buxtehude (DE)
(72) Erfinder: Frerichs, Arnold, 21614 Buxtehude (DE); Heuer, Burkhard, 21709 Himmelpforten (DE)
(74) Vertreter: Hauck, Graalfs, Wehnert, Döring, Siemons

(56) Entgegenhaltungen:
- DE-A- 4 403 531
- DE-A- 19 738 412
- US-A- 4 258 253
- US-A- 5 969 331

## Beschreibung

Die Erfindung bezieht sich auf eine Kartenlesevorrichtung nach dem Oberbegriff des Patentanspruchs 1.

Kartenlesevorrichtungen werden zum Beispiel an einer Tür eines Automaten oder dergleichen angebracht. Sie enthalten einen Einsteckschlitz für die Karte, welcher üblicherweise durch eine Schutzklappe verschlossen ist. An der Rückseite der Wand ist eine Leseeinheit angebracht. Sie nimmt die Karte während des Leseprozesses auf und enthält entsprechende Abtastmittel in einer sogenannten Kontaktiereinheit. Die Kontaktiereinheit ist mit einer Lese- und Steuereinheit verbunden, welche die von der Kontaktiereinheit kommenden Signale verarbeitet, z.B. die Karte identifiziert und den Speicherinhalt abliest und ggf. einen Betrag abbucht usw.

Aus DE 197 38 412 ist eine Leseeinrichtung bekannt geworden, bei der eine Schlitzeinheit getrennt ausgebildet an der Wand z.B. eines Automaten befestigt ist. Die Leseeinheit wird als Ganzes über eine lösbare Verbindung an der Rückseite der Wand mit der Schlitzeinheit befestigt. Dadurch kann z.B. zu Wartungszwecken die Leseeinheit entfernt werden, ohne dass die Schlitzeinheit demontiert werden muss. Zu diesem Zweck weist die Schlitzeinheit zwei über eine Öffnung in der Wand nach hinten stehende Ansätze auf, die teleskopisch mit entsprechenden Fassungsabschnitten der Leseeinheit zusammenwirken.

Der Erfindung liegt die Aufgabe zugrunde, eine Kartenlesevorrichtung zu schaffen, bei der ohne Zuhilfenahme von Werkzeugen zumindest auf besonders einfache Art und Weise die Kontaktiereinheit von der Leseeinheit getrennt werden kann.

Diese Aufgabe wird durch die Merkmale des Patentanspruchs 1 gelöst.

Bei der Erfindung ist die Kontaktiereinheit mit einer zweiten Leiterplatte als separates Teil ausgebildet, wobei die zweite Leiterplatte über Steckverbinder mit der ersten Leiterplatte verbindbar ist und die Kontaktiereinheit mittels Befestigungsmittel lösbar am Tragrahmen befestigt ist.

Üblicherweise weist eine Leseeinheit einen Tragrahmen auf, der vorzugsweise aus Kunststoffmaterial geformt ist und der als Träger dient für eine Leiterplatte, auf der alle Bauteile angeordnet sind für die Funktion einer Kartenlesevorrichtung. Die zweite Leiterplatte, die beispielsweise mit Hilfe von Schrauben fest mit der Kontaktiereinheit verbunden ist, hat lediglich Leiterfunktion und braucht keine zusätzlichen elektronischen Steuerbauteile aufzunehmen.

Bei der Erfindung ist von der Erkenntnis ausgegangen worden, dass das empfmdliche Bauteil einer Leseeinheit die Kontaktiereinheit ist. Sie weist verschleiß- oder störungsanfällige Kontakte auf, die mit dem Chip einer Chipkarte zusammenwirken; sie weist ferner elektromagnetische Betätigungen zum Verriegeln der Karte während des Ablesevorgangs auf. Daher ist für Wartungszwecke vorteilhaft, wenn auf einfache Weise Zugang zur Kontaktiereinheit geschaffen werden kann, um diese ggf. durch eine andere auszutauschen. Die Stecker der zweiten Leiterplatte sind so angeordnet, dass sie beim Aufsetzen der zweiten Leiterplatte auf die erste in entsprechende Steckfassungen der ersten Leiterplatte eingeführt werden. Mit Hilfe der Befestigungsmittel wird dann die Kontaktiereinheit am Tragrahmen festgelegt, wobei hierfür auch ein Abschnitt der zweiten Leiterplatte dienen kann. Zu diesem Zweck weist nach einer Ausgestaltung der Erfindung die zweite Leiterplatte seitliche Ansätze auf, über die sie lösbar mit dem Tragrahmen verbindbar ist.

Zur Anbringung der Kontaktiereinheit am Tragrahmen kann dieser an gegenüberliegenden Seiten einen Befestigungssteg aufweisen mit mindestens einem Befestigungsloch zur Festlegung der Kontaktiereinheit. Üblicherweise ist die Abmessung von Tragrahmen einerseits und erster Leiterplatte andererseits derart, dass die Leiterplatte annähernd die komplette Fläche des Tragrahmens bedeckt. Eine Ausgestaltung der Erfindung sieht in diesem Zusammenhang vor, dass die Befestigungsstege versenkt in einer zugeordneten Ausnehmung der fest mit dem Tragrahmen verbundenen ersten Leiterplatte angeordnet sind.

Die Befestigung der Kontaktiereinheit am Tragrahmen kann in geeigneter Weise über eine Schraubverbindung erfolgen. Soll jedoch vollständig auf Werkzeuge verzichtet werden, sieht eine andere Ausgestaltung der Erfindung vor, dass das Befestigungsmittel von einem Kunststoffclip gebildet ist. Der Kunststoffclip kann mindestens einen durch Löcher in der zweiten Leiterplatte und im Tragrahmen hindurchsteckbaren Dorn aufweisen sowie einen federnden Rastabschnitt, der eine Kante des Tragrahmens hintergreift. Der Dorn sorgt für die seitliche Festlegung der Kontaktiereinheit über die zweite Leiterplatte, und der Rastabschnitt verhindert ein Abheben der Kontaktiereinheit von der ersten Leiterplatte.

Um die seitliche Sicherung der Kontaktiereinheit zu verbessern, sieht eine weitere Ausgestaltung der Erfindung vor, dass ein Abschnitt des Kunststoffclips komplementär zur Kontur der Ausnehmung geformt ist. Der Clip ist daher seitlich zu allen Seiten gesichert. Der komplementäre Abschnitt kann z.B. von einer Deckenplatte des Kunststoffclips gebildet werden, an welcher der Dorn angeformt sein kann. Die Ausnehmung im Tragrahmen weist zur Innenseite des Tragrahmens vorzugsweise eine offene Lücke auf, über die seitliche Ansätze der zweiten Leiterplatte in die Ausnehmung hineinstehen. Daher braucht die Kontaktiereinheit lediglich von oben auf die erste Leiterplatte aufgesetzt werden, was eine besonders einfache Montage und Demontage ermöglicht. Der Kunststoffclip weist einen Wandabschnitt auf, der die Lücke bündig abschließt.

Nach einer weiteren Ausgestaltung der Erfindung sind am Kunststoffclip zwei parallel beabstandete Beine angeformt, die sich an dem Steg abstützen. Auf diese Weise wird eine weitere Stabilisierung des Kunststoffclips und damit der Kontaktiereinheit erhalten.

Nach einer anderen Ausgestaltung der Erfindung ist auf der dem Dorn gegenüberliegenden Seite des Kunststoffclips mindestens ein Abstandshalterbein geformt. Mit Hilfe des Abstandshalterbeins beider Clips kann die gesamte Leseeinheit auf einer Unterlage abgestellt werden, ohne dass empfindliche Teile der Kontaktiereinheit die Unterlage berühren. Dies ist insbesondere für Fertigungs- und Prüfzwecke von Bedeutung.

Der bereits erwähnte Rastabschnitt kann an einem Fortsatz eines Abstandshalterbeins in Richtung Dorn geformt sein. Der Fortsatz ist vorzugsweise flexibel an einem Steg angebunden, der sich von einer Halteplatte für den Dorn fort parallel zum Dorn erstreckt.

Wenn nach einer weiteren Ausgestaltung der Erfindung die zweite Leiterplatte ein Befestigungsloch und der Tragrahmen zwei Befestigungslöcher auf jeder Seite aufweist, kann die Kontaktiereinheit in zwei definierten Positionen relativ zur Schlitzeinheit montiert werden.

Für das Lesen von Karten sind zwei Konzepte üblich. Bei einem wird die Karte vollständig in die Kontaktiereinheit eingeschoben und kann während des Lesevorgangs von außen nicht herausgezogen werden. Eine geeignete Verriegelung innerhalb der Kontaktiereinheit sorgt dafür, dass während des Lesevorgangs die Karte eingezogen bleibt. Nach Beendigung des Lesevorgangs wird die Verriegelung gelöst und die Karte wird eine vorgegebene Strecke aus der Schlitzeinheit heraus bewegt, damit sie von Hand entfernt werden kann. Bei dem anderen Konzept bleibt die Karte von außen zugänglich und kann in jedem Augenblick vom Benutzer entfernt werden. Die beschriebene Anbringung der Kontaktiereinheit lässt die Nutzung beider Konzepte zu, indem sie wahlweise in einer der beiden möglichen Positionen festgelegt wird.

Die Erfindung wird nachfolgend anhand von in Zeichnungen dargestellten Ausführungsbeispielen näher erläutert.
- Fig. 1: zeigt eine Draufsicht auf eine Leseeinheit nach der Erfindung.
- Fig. 2: zeigt einen Schnitt durch die Darstellung nach Fig. 1 entlang der Linie 2-2.
- Fig. 3: zeigt einen Schnitt durch die Darstellung nach Fig. 1 entlang der Linie 3-3.
- Fig. 4: zeigt eine Draufsicht auf einen Teil der Leseeinheit nach Fig. 2 ohne eingesetzten Kunststoffclip.
- Fig. 5: zeigt vergrößert die Einzelheit nach Fig. 4 mit eingesetztem Kunststoffclip.
- Fig. 6: zeigt vergrößert die Einzelheit 6 nach Fig. 3.
- Fig. 7: zeigt vergrößert die Einzelheit 7 nach Fig. 2.

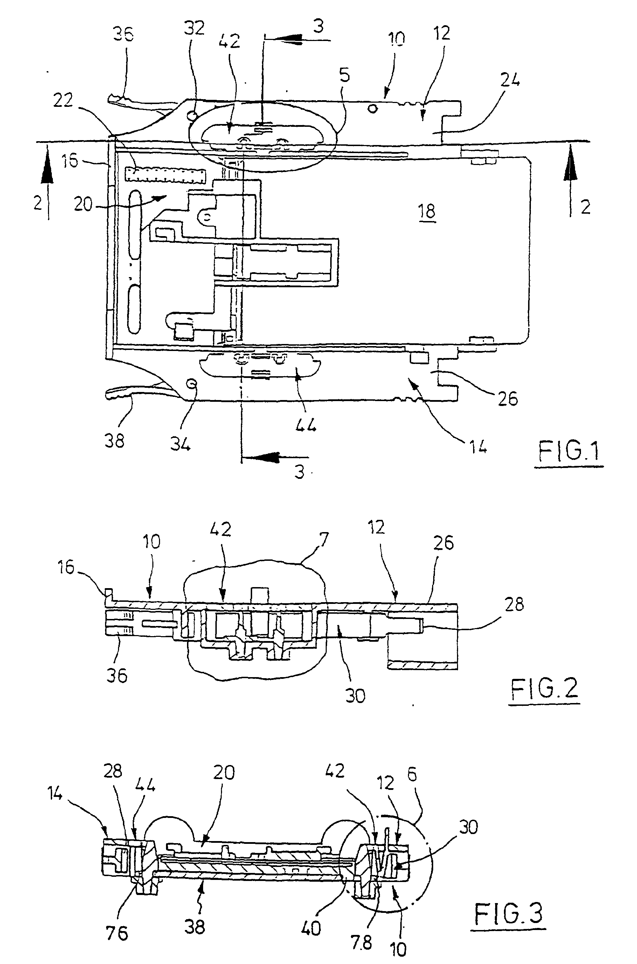

Fig. 1 zeigt die Leseeinheit mit einem Tragrahmen 10, der annähernd rechtekkige Kontur hat, mit zwei parallelen relativ breiten Tragleisten 12, 14, die am linken Ende in Fig. 1 durch einen Steg 16 miteinander verbunden sind und an der gegenüberliegenden Seite durch einen etwas breiteren Steg, der jedoch nicht zu erkennen ist, weil eine Chipkarte 18 aufgenommen gezeigt ist und somit den Steg verdeckt. An der Unterseite des Tragrahmens 10 ist eine erste Leiterplatte angebracht, beispielsweise durch Verschraubung. Sie ist in den Zeichnungen nicht dargestellt. Ihre Abmessung ist derart, dass sie annähernd die Kontur des Tragrahmens 10 ausfüllt. Oberhalb des Tragrahmens 10 ist in Fig. 1 eine Kontaktiereinheit 20 am Tragrahmen 10 angebracht. In Fig. 1 ist gezeigt, wie die Chipkarte 18 in die Kontaktiereinheit 20 eingesteckt ist. Der Aufbau der Kontaktiereinheit soll im Einzelnen nicht beschrieben werden. Er ist konventionell. Die Kontaktiereinheit weist eine Steckerleiste 22 auf mit in die Zeichenebene hineinstehenden Steckerstiften, die mit entsprechenden Steckfassungen der nicht gezeigten ersten Leiterplatte zusammenwirken.

Die Leisten 12, 14 haben am rechten Ende Steckfassungsabschnitte 24, 26 für nicht gezeigte Ansätze einer Schlitzeinheit, die durch eine Öffnung einer Wand eines Automaten hindurch gesteckt sind. Insoweit wird auf die bereits genannte DE 197 38 412 verwiesen. Mit Hilfe der Ansätze der Schlitzeinheit kann die Leseeinheit nach den Figuren 1 bis 3 an der Schlitzeinheit lösbar befestigt werden, indem die Steckfassungen 24, 26 auf die Ansätze aufgeschoben werden. Eine Verriegelung erfolgt mit Hilfe einer Verriegelungsnase 28, welche in eine Ausnehmung der nicht gezeigten Ansätze eingreift. Die Verriegelungsnase 28 ist am Ende eines Hebels 30 geformt, der sich an der Leiste 12, 14 nach hinten erstreckt und bei 32 bzw. 34 schwenkbar gelagert ist. Eine hintere Handhabe 36, 38 dient zur Betätigung des Hebels 30, damit die Rastnase 28 wahlweise mit den Ansätzen außer Eingriff gebracht werden kann. Zu diesem Zweck stützt sich der flexible Hebel 30 an einem tragrahmenfesten Punkt (nicht gezeigt) ab, so dass er bei Betätigung der Handhabe 36, 38 nach außen gebogen wird zwecks Außereingriffbringens der Rastnasen 28 mit den Ausnehmungen der Ansätze.

Die Kontaktiereinheit 20 weist an der Unterseite eine Leiterplatte 38 auf, die beispielsweise über eine Schraubverbindung mit der Kontaktiereinheit fest verbunden ist. Es können auch Noppen an der zugekehrten Seite der Kontaktiereinheit 20 geformt sein, die mit entsprechenden Löchern der Leiterplatte 38 zusammenwirken, wie dies bei 40 in Fig. 3 angedeutet ist. Kontaktiereinheit 20 und Leiterplatte 38 stellen mithin ein einheitliches Teil dar. Seine Festlegung an dem Tragrahmen 10 erfolgt mit Hilfe von zwei identischen Kunststoffclips 42, 44, wie nachfolgend näher beschrieben werden soll.

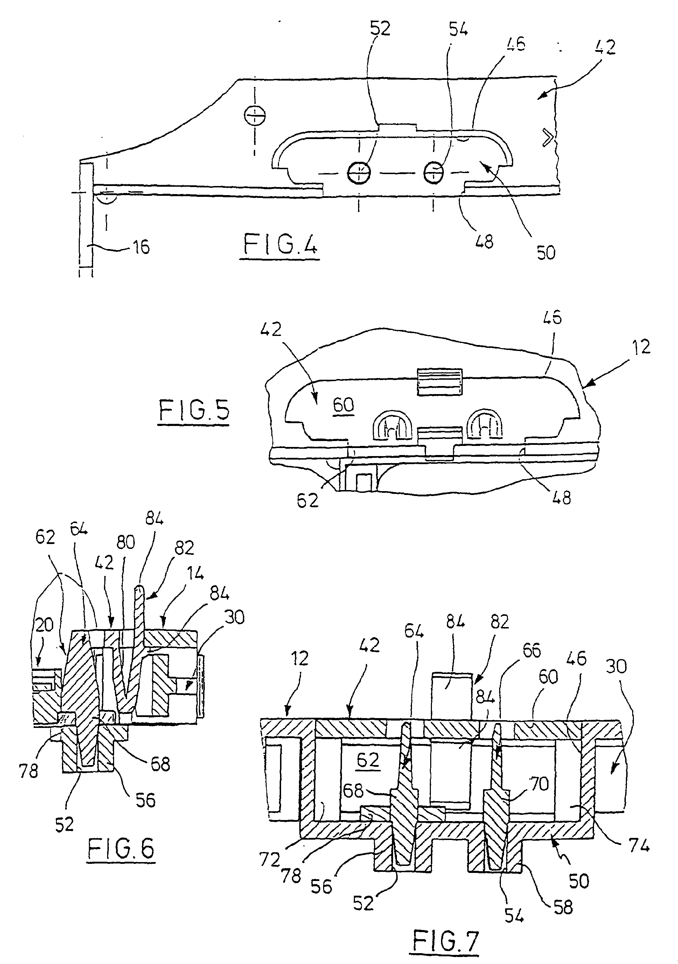

In Fig. 4 ist zu erkennen, dass die Leisten 12, 14 jeweils eine Ausnehmung 46 aufweisen, welche zur Innenseite des Tragrahmens 10 geöffnet ist über eine Lücke 48. Gegenüber der Oberseite in Fig. 4 (im eingebauten Zustand der Vorrichtung ist dies die Unterseite) nach innen versetzt ist ein Befestigungssteg 50 an der Leiste 12 bzw. 14 geformt mit zwei in Längsrichtung beabstandeten Öffnungen 52, 54. Wie aus Fig. 7 zu erkennen, sind an der Unterseite des Steges 50 Fassungsabschnitte 56, 58 geformt. Die Kontur der länglichen Ausnehmung 46 soll im Einzelnen nicht beschrieben werden. Der Clip 42, der nachfolgend allein beschrieben wird, weist eine Deckenplatte 60 auf, die in der Kontur der Ausnehmung 46 komplementär ist, wie in Fig. 5 zu erkennen. Der Kunststoffclip 42 weist einen senkrechte zur Deckenplatte 60 erstreckten Wandabschnitt 62 auf einer Seite auf, der die Lücke 48 schließt. An dem Wandabschnitt 62 sind zwei Dorne 64, 66 angeformt, die im unteren Bereich konisch und klemmend in den Öffnungen 52, 54 einsteckbar sind. Oberhalb des konischen Abschnitts sind sie annähernd zylindrisch. Oberhalb der zylindrischen Abschnitte 68, 70 sind die Dorne 64, 66 verjüngt und erstrecken sich in Öffnungen der Deckplatte 60. Die Öffnungen dienen lediglich Formungszwecken und sollen daher im Einzelnen nicht beschrieben werden.

An den Enden des Clips 42 sind an die Deckplatte 60 zwei Abstandshalterbeine 72, 74 angeformt, welche auf dem Befestigungssteg 50 aufsitzen. Wie man aus der zusammenschauenden Betrachtung der Figuren 2, 3, 6 und 7 erkennt, weist die zweite Leiterplatte 38 seitliche Ansätze 76, 78 auf, durch deren Befestigungsloch jeweils ein Dorn 64 hindurchgeführt ist, wobei sein zylindrischer Abschnitt 68 annähernd passend im Befestigungsloch sitzt. Der Dorn 64 legt mithin die Kontaktiereinheit 20 über seine Leiterplatte 38 am Tragrahmen 10 seitlich unverrückbar fest. Wie aus Fig. 7 zu erkennen, könnte der Ansatz 78 auch vom Dorn 66 festgelegt werden, wodurch die Kontaktiereinheit 20 eine relativ zum Tragrahmen 10 andere Position aufweist.

Von der Deckenplatte 14 annähernd parallel zum Dorn erstreckt sich ein Steg 80, an dem ein Bein 82 flexibel angebunden ist. An der Außenseite des Beins 82 ist eine Rastnase 84 angeformt, welche die Unterseite des oberen Abschnitts der Tragleiste 14 nach Fig. 6 untergreift, um den Clip 42 auch nach oben hin festzulegen. Das Bein 82 hat einen nach oben stehenden Beinabschnitt 84, über welche Beinabschnitte 84 die Einheit nach Fig. 1 auf einer Unterlage abgestellt werden kann, ohne dass die Kontaktiereinheit die Unterlage berührt. Außerdem dient der Beinabschnitt 84 zum Erfassen von Hand, um den Clip 42 bzw. 44 zu lösen, um im Anschluss die Kontaktiereinheit 20 zu entfernen.

## Patentansprüche

1. Kartenlesevorrichtung mit einem an einem Träger, z.B. einer Wand oder Tür eines Automaten befestigbaren Tragrahmen, der eine Steuer- und Ableseelektronik aufweisende Leiterplatte und eine Kontaktiereinheit für eine Chipkarte hält, wobei die Kontaktiereinheit elektrisch mit der Leiterplatte verbindbar ist, **dadurch gekennzeichnet, dass** die Kontaktiereinheit (20) mit einer zweiten Leiterplatte (38) ein separates Teil bildet, wobei die zweite Leiterplatte (38) über Steckverbinder mit der ersten Leiterplatte elektrisch verbindbar ist und die Kontaktiereinheit (20) mit Hilfe von Befestigungsmitteln (42, 44) lösbar am Tragrahmen (10) befestigbar ist.

2. Vorrichtung nach Anspruch 1, **dadurch gekennzeichnet, dass** die zweite Leiterplatte (38) seitlich Ansätze (76, 78) aufweist, über die sie mit dem Tragrahmen (10) lösbar verbindbar ist.

3. Vorrichtung nach Anspruch 1 oder 2, **dadurch gekennzeichnet, dass** die Kontaktiereinheit (20) mit der zweiten Leiterplatte (38) über Schrauben verbunden ist.

4. Vorrichtung nach einem der Ansprüche 1 bis 3, **dadurch gekennzeichnet, dass** der Tragrahmen (10) auf gegenüberliegenden Seiten jeweils einen Befestigungssteg (50) aufweist mit mindestens einem Befestigungsloch (52, 54) zur Festlegung der Kontaktiereinheit (20).

5. Vorrichtung nach Anspruch 4, **dadurch gekennzeichnet, dass** die Befestigungsstege (50) versenkt in einer zugeordneten Ausnehmung der fest mit dem Tragrahmen (10) verbundenen ersten Leiterplatte angeordnet sind.

6. Vorrichtung nach Anspruch 1, 2, 4 oder 5, **dadurch gekennzeichnet, dass** die Befestigungsmittel (42, 44) von einem Kunststoffclip gebildet sind.

7. Vorrichtung nach Anspruch 6, **dadurch gekennzeichnet, dass** der Kunststoffclip mindestens einen durch Löcher in der zweiten Leiterplatte (38) und im Tragrahmen (10) hindurchsteckbaren Dorn (64, 66) aufweist und einen federnden Rastabschnitt (84), der eine Kante des Tragrahmens (10) hintergreift.

8. Vorrichtung nach einem der Ansprüche 5 bis 7, **dadurch gekennzeichnet, dass** ein Abschnitt (60) des Kunststoffclips komplementär zur Kontur der Ausnehmung (46) geformt ist.

9. Vorrichtung nach Anspruch 8, **dadurch gekennzeichnet, dass** die Ausnehmung (46) zur Innenseite des Tragrahmens (10) eine offene Lücke (48) aufweist, über die seitlich ein Ansatz (76, 78) der zweiten Leiterplatte (38) in die Ausnehmung hinein steht und der Kunststoffclip einen Wandabschnitt (62) aufweist, der die Lücke (48) bündig abschließt.

10. Vorrichtung nach einem der Ansprüche 7 bis 9, **dadurch gekennzeichnet, dass** am Kunststoffclip zwei parallel beabstandete Beine (72, 74) angeformt sind, die sich auf dem Steg (50) abstützen.

11. Vorrichtung nach einem der Ansprüche 7 bis 10, **dadurch gekennzeichnet, dass** auf der dem Dorn (64, 66) gegenüberliegenden Seite des Kunststoffclips mindestens ein Abstandshalterbein (84) geformt ist.

12. Vorrichtung nach Anspruch 7 und 11, **dadurch gekennzeichnet, dass** der Rastabschnitt (84) an einem Fortsatz eines Abstandshalterbeins (84) in Richtung Dorn geformt ist.

13. Vorrichtung nach Anspruch 12, **dadurch gekennzeichnet, dass** der Fortsatz flexibel an einem Steg (80) angebunden ist, der an einer Deckenplatte (60) angeformt ist.

14. Vorrichtung nach einem der Ansprüche 1 bis 11, **dadurch gekennzeichnet, dass** die zweite Leiterplatte (38) ein Befestigungsloch und der Tragrahmen (10) zwei Befestigungslöcher aufweist zwecks Festlegung der Kontaktiereinheit (20) in zwei definierten Definitionen.

## Claims

1. A card reading device comprising a carrier frame which is adapted to be mounted on a support, e.g. a wall or door of an automatic machine, and holds a printed-circuit board having a control and reading electronic system and a contacting unit for a chip card, the contacting unit being adapted to be connected electrically to the printed-circuit board, **characterized in that** said contacting unit (20) constitutes a separate component along with a second printed-circuit board (38), wherein said second printed-circuit board (38) is adapted to be connected to said first printed-circuit board via pin-and-socket connectors and said contacting unit (20) is adapted to be releasably mounted on said carrier frame (10) by using fastening means (42, 44).

2. The device according to claim 1, **characterized in that** said second printed-circuit board (38) laterally has lugs (76, 78) via which it can be releasably connected to said carrier frame (10).

3. The device according to claim 1 or 2, **characterized in that** said contacting unit (20) is connected to said second printed-circuit board (38) by means of screws.

4. The device according to any one of claims 1 to 3, **characterized in that** said carrier frame (10), on opposed sides, has a mounting web (50) each which include at least one mounting hole (52, 54) to locate said contacting unit (20).

5. The device according to claim 4, **characterized in that** said mounting webs (50) are disposed in a countersunk manner within an associated recess of said first printed-circuit board firmly connected to said carrier frame (10).

6. The device according to claim 1, 2, 4 or 5, **characterized in that** said fastening means (42, 44) are formed by a plastic clip.

7. The device according to claim 6, **characterized in that** said plastic clip has at least one mandrel (64, 66) which is adapted to be slid through holes in said second printed-circuit board (38) and said carrier frame (10), and a springy detent portion (84) which grips behind an edge of said carrier frame (10).

8. The device according to any one of claims 5 to 7, **characterized in that** a portion (60) of said plastic clip is shaped to be complementary to the contour of said recess (46).

9. The device according to claim 8, **characterized in that** said recess (46), towards the inside of said carrier frame (10), has an open gap (48) through which a lug (76, 78) of said second printed-circuit board (38) laterally protrudes into the recess, and said plastic clip has a wall portion (62) which flushly completes said gap (48).

10. The device according to any one of claims 7 to 9, **characterized in that** said plastic clip has formed thereto two parallel-spaced legs (72, 74) which are supported on said web (50).

11. The device according to any one of claims 7 to 10, **characterized in that** at least one spacer leg (84) is formed on that side of said plastic clip which is opposite said mandrel (64, 66).

12. The device according to claims 7 and 11, **characterized in that** said detent portion (84) is formed on an extension of a spacer leg (84) towards said mandrel.

13. The device according to claim 12, **characterized in that** said extension is flexibly tied to a web (80) which is formed to a cover plate (60).

14. The device according to any one of claims 1 to 11, **characterized in that** said second printed-circuit board (38) has one mounting hole and said carrier frame (10) has two mounting holes to locate said contacting unit (20) in two defined definitions.

## Revendications

1. Dispositif lecteur de cartes comprenant un cadre porteur qui peut être fixé à un support, par exemple à une paroi ou une porte d'un automate, qui tient un circuit imprimé présentant une électronique de commande et de lecture, et un dispositif de contact pour une carte à puce, l'unité de contact pouvant être connectée électriquement au circuit imprimé, **caractérisé en ce que** l'unité de contact (20) forme, avec un deuxième circuit imprimé (38) une partie séparée, le deuxième circuit imprimé (38) pouvant être connecté électriquement au premier circuit imprimé par des connecteurs à broches, et l'unité de contact (20) pouvant être fixée au cadre porteur (10) de façon démontable à l'aide de moyens de fixation (42, 44).

2. Dispositif selon la revendication 1, **caractérisé en ce que** le deuxième circuit imprimé (38) présente latéralement des saillies (76, 78) par l'intermédiaire desquelles il peut être relié au cadre porteur (10) de façon démontable.

3. Dispositif selon la revendication 1 ou 2, **caractérisé en ce que** l'unité de contact (20) est assemblée au deuxième circuit imprimé (38) au moyen de vis.

4. Dispositif selon une des revendications 1 à 3, **caractérisé en ce que** le cadre porteur (10) présente sur des côtés opposés, à chaque fois, une nervure de fixation (50) possédant au moins un trou de fixation (52, 54) pour l'immobilisation de l'unité de contact (20).

5. Dispositif selon la revendication 4, **caractérisé en ce que** les nervures de fixation (50) sont disposées encastrées dans un évidement correspondant du premier circuit imprimé assemblé rigidement au cadre porteur (10).

6. Dispositif selon la revendication 1, 2, 4 ou 5, **caractérisé en ce que** les moyens de fixation (42, 44) sont constitués par une attache en matière plastique.

7. Dispositif selon la revendication 6, **caractérisé en ce que** l'attache en matière plastique présente au moins un ergot (64, 66) qui peut être enfilé à travers des trous ménagés dans le deuxième circuit imprimé (38) et dans le cadre porteur (10), et un segment d'encliquetage élastique (84) qui s'accroche derrière un bord du cadre porteur (10).

8. Dispositif selon une des revendications 5 à 7, **caractérisé en ce qu'**un segment (60) de l'attache en matière plastique est d'une forme complémentaire du contour de l'évidement (46).

9. Dispositif selon la revendication 8, **caractérisé en ce que** l'évidement (46) présente, en direction du côté intérieur du cadre porteur (10), une lacune ouverte (48) au-delà de laquelle une saillie (76, 78) du deuxième circuit imprimé (38) est engagée latéralement dans l'évidement, et l'attache en matière plastique présente un segment de paroi (62) qui ferme la lacune (48) à l'affleurement.

10. Dispositif selon une des revendications 7 à 9, **caractérisé en ce qu'**à l'attache en matière plastique, sont venues de formage deux branches (72, 74) espacées et parallèles entre elles, et qui s'appuient sur la nervure (50).

11. Dispositif selon une des revendications 7 à 10, **caractérisé en ce que**, sur le côté de l'attache en matière plastique qui est à l'opposé de l'ergot (64, 66), est formée au moins une branche formant entretoise (84).

12. Dispositif selon les revendications 7 et 11, **caractérisé en ce que** le segment d'encliquetage (84) est formé sur un prolongement de la branche formant entretoise (84) en direction de l'ergot.

13. Dispositif selon la revendication 12, **caractérisé en ce que** le prolongement est lié de façon flexible à une nervure (80) qui est venue de formage sur une plaque de plafond (60).

14. Dispositif selon une des revendications 1 à 11, **caractérisé en ce que** le deuxième circuit imprimé (38) présente un trou de fixation et le cadre porteur (10) présente deux trous de fixation, pour l'immobilisation de l'unité de contact (20) dans deux définitions définies.
